# EUROPEAN PATENT SPECIFICATION

(11) **EP 1 087 207 B1**
(45) Date of publication and mention of the grant of the patent: **12.03.2008**
(21) Application number: 00120766.1
(22) Date of filing: 22.09.2000
(51) Int. Cl.: G01C 21/26, G08G 1/0968

(54) **A point retrieval output system by a telephone number, and a memory medium**
Punktssuchausgabesystem mittels einer Telefonnummer und Speichermedium
Système de sortie de recherche de point par numéro de téléphone, et support de mémoire

(30) Priority: 24.09.1999 JP 27016199
(43) Date of publication of application: 28.03.2001
(73) Proprietor: AISIN AW CO., LTD., Anjo-shi, Aichi 444-1192 (JP); Alpine Electronics, Inc., Tokyo 141-8501 (JP)
(72) Inventor: Yamada, Kunihiro, c/o Aisin AW Co., Ltd., Aichi 444-8564 (JP); Ezaki, Toru, c/o Alpine Electronics, Inc., Shinagawa-ku, Tokyo 141-8501 (JP)
(74) Representative: TBK-Patent

(56) References cited:
- EP-A- 0 810 571
- EP-A- 0 933 744
- DE-A- 4 219 171
- PATENT ABSTRACTS OF JAPAN vol. 018, no. 129 (P-1703), 3 March 1994 (1994-03-03) & JP 05 313580 A (SUMITOMO ELECTRIC IND LTD), 26 November 1993 (1993-11-26)
- PATENT ABSTRACTS OF JAPAN vol. 018, no. 587 (P-1824), 10 November 1994 (1994-11-10) & JP 06 215296 A (AISIN AW CO LTD;OTHERS: 01), 5 August 1994 (1994-08-05)

## Description

### Technical field of the invention

The present invention relates to a point retrieval output system by a telephone number in which information on a point of a subscriber corresponding to a telephone number is retrieved by inputting the telephone number and output, and a memory medium.

### Description of the Prior art and problems to be solved by the invention

Document JP05313580 describes a telephone number input means for a navigation system to facilitate the process of inputting a destination via a telephone number.

A telephone number is used for inputting a point such as a destination, a passage and so on in a navigation system. Such a system as this retrieves point coordinates of a point corresponding to a telephone number after that telephone number is input, and then the system displays a map showing the point coordinates being located at its center. However, since the telephone number is made of enumeration of numbers, it is inconvenient that a map showing a point different from one desired by a driver is displayed if the telephone number is recognized as a wrong number or if a wrong telephone number is input. Further, even if a telephone number is correctly input and a map showing a point desired by the user being located at its center is displayed, in case that a subscriber of the input telephone number is an entrepreneur of a firm, a store, a facility or the like, the user can confirm that he/she arrives at his/her desired point by recognizing a signboard, a guide notice or the like of the facility when the user actually moves in the vicinity of the point, however, if the subscriber of the input telephone number is a private subscriber, there is no signboard or no guide point and further no nameplate is put even when the user actually moves to the point, thus, there is a problem that the user is not able to recognize whether or not the point is his/her desired point.

### Summary of the invention

The present invention is provided to solve the above problem.

According to the present invention the above problem is solved by a point retrieval output system by a telephone number for retrieving information on a point of a subscriber of the corresponding telephone number by inputting the telephone number comprising: memory means for storing at least telephone numbers, specific information for specifying subscribers and information on points of the subscribers; input means for inputting a telephone number and specific information for specifying a subscriber of the telephone number, retrieval means for retrieving information on a point of the subscriber on the basis of the telephone number and the specific information for specifying the subscriber input by the input means; and output control means for controlling an output of information on the point of the subscriber retrieved by the retrieval means on the basis of the inputs of the telephone number and specific information for specifying the subscriber.

According to another feature of the present invention, said memory means store therein identifying information for classifying whether or not the subscriber of the telephone number is a private subscriber, said output control means judge said identifying information when the telephone number is input and control an output of information on the point of the subscriber under the condition that the specific information for specifying the subscriber is input on the basis of the corresponding judgment, and said identifying information is indicative of presence and absence of restriction, wherein a telephone number of private subscriber is given a setting of restriction and a telephone number other than telephone numbers of private subscribers is given no restriction, and said output control means output information on the point of the subscriber of the telephone number retrieved under condition that said identifying information is of restriction, said output control means further judge a matching of the specific information for specifying the subscriber of the telephone number by inputting specific information for specifying the subscriber under the condition that said identifying information is of no restriction, output information on the point of the subscriber of the matching telephone number, display a menu for selecting private home or vicinity of local telephone exchange number under the condition that said identifying information is of restriction, judge a matching of the specific information for specifying the subscriber of the telephone number by inputting specific information for subscriber when a private home is input and output information on the point of the subscriber of the matching telephone number.

Further, according to another feature of the present invention, said memory means store map data and said output control means show a menu for selecting vicinity of local telephone exchange number when the telephone number cannot be retrieved by said retrieval means or the digits of the telephone number are input only as many as the local telephone exchange number and output a vicinity map when vicinity of the local telephone exchange number is selected or a vicinity map by inputting an address within the local telephone exchange number, and an input of specific information for specifying said subscriber is performed by inputting at least a part of a name of the subscriber with the Japanese syllabary.

According to still another feature of the present invention, said memory means store pre-registered point information, said output control means output the corresponding point information when the telephone number retrieved by said retrieval means has said point information, said memory means store at least an address or a name and point coordinates as information on the point of the subscriber, said output control means display a map on the basis of said point coordinates after said address or name is displayed when information on the point of said subscriber is output and said memory means in which map data, point information data having at least telephone numbers, readings or point names and point coordinates, telephone number data for retrieving a telephone number and Japanese syllabary data for retrieving a reading or a point name are stored.

Accordingly, the present invention properly performs retrieval and guidance by checking other information for specifying the telephone number and a subscriber thereof upon input of those.

### Brief Description of the Drawings

Fig. 1 is a diagram showing an embodiment of a point retrieval output system by a telephone number according to the present invention.
Fig. 2 is a flowchart describing the entire navigation system according to the present invention.
Fig. 3 is a diagram showing an example of retrieval data structure to be used for a point retrieval output system by a telephone number according to the present invention.
Fig. 4 (consisting of Fig. 4A and Fig. 4B) is a diagram showing an example of data structure in which data are divided into data for town page and hello page.
Fig. 5 is a flowchart showing an example of retrieval in the telephone number input mode and guidance processing.
Fig. 6 (consisting of Fig. 6A and Fig. 6B) is a flowchart showing an example of processing for a point setting in the telephone number input mode.
Fig. 7 is a diagram describing an example of screen change when a destination is determined by a point setting.
Fig. 8 is an example of a telephone number input screen.
Fig. 9 is a diagram showing an example of selection screen to be displayed when a hit telephone number is found in the hello page.
Fig. 10 is a diagram showing an example of selection screen to be displayed when no hit is found or a number of digits is input as many as the local telephone exchange number.
Fig. 11 is a diagram showing an example of Japanese syllabary screen.
Fig. 12 is a diagram showing an example of map display screen for displaying a facility name.
Fig. 13 is a diagram showing an example of map display screen for displaying a private home.
Fig. 14 is a diagram showing an example of map display screen for displaying an address with a pinpoint.
Fig. 15 is a diagram showing an example of vicinity map display screen for displaying a vicinity map on the basis of representative coordinates.
Fig. 16 is a diagram showing an example of a list of same family names to be displayed if a hit is found in private homes.
Fig. 17 is a diagram showing an example of a list of neighbouring private homes if a hit is found in private homes by inputting a telephone number.
Fig. 18 is a diagram showing an example when distances and directions from a specific point are added to a list shown in Fig. 17.
Fig. 19 is a flowchart describing an example of processing when a list of same family names is output.
Fig. 20 is a flowchart describing an example of processing when a list of neighbouring private homes is output.

### Detailed Description of the Preferred Embodiment

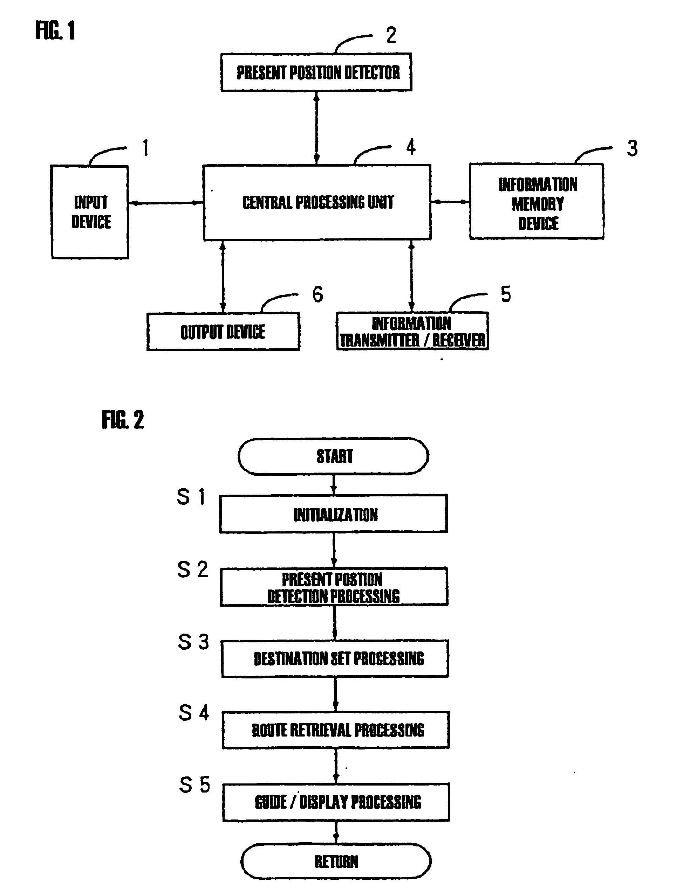

The followings are embodiments of the invention, which will be described with reference to the drawings. Fig. 1 is a diagram showing an embodiment of a point retrieval output system by a telephone number according to the present invention, which includes an input device 1 for inputting information on route guidance; a present position detector 2 for detecting information on a vehicle present position; information memory device 3 for storing therein display/audio guidance data as necessary for route guidance, programs (application and/or OS) and the like; a central processing unit 4 for performing route retrieval processing as navigator processing means, display/voice guidance processing as required for route guidance and further the entire system control; an information transmitter/receiver 5 for transmitting and receiving information on the vehicle when traveling, for example, road information or traffic information and for detecting information on the vehicle present position and further transmitting and receiving information on the vehicle present position and an output device 6 for outputting information on route guidance. Namely, it shows an example of a point retrieval output system by a telephone number applied to a navigation system according to the present invention.

The input device 1 is provided with functions for inputting a destination and instructing the central processing unit 4 to execute the navigation processing in conformity with a driver's intention. As the means for attaining such functions, a remote controller and the like such as a touch switch or a jog dial and the like for inputting a destination in the form of a telephone number or coordinates on a map etc., and for requesting route guidance can be used. Further, the invention is provided with a device for performing an interaction by voice input, which functions as a voice input device. There may also be added a record card reader for reading data recorded in an IC card or magnetic card. Furthermore, there may be added a data communication device which is for data communications between information sources such as an information center for accumulating therein data necessary for navigation and providing information via communication links upon the driver's request, and a portable style electronic device etc. having map data, destination data, data of a simple frame map and a building shaped map and the like.

The present position detector 2 is composed of a device for receiving information on the vehicle present position by using a global positioning system (GPS), an absolute direction sensor for detecting the travel direction of the vehicle with an absolute direction by using, for example, a geomagnetic compass, a relative direction sensor for detecting the travel direction of the vehicle by using, for example, a steering sensor and a gyro sensor, a distance sensor for detecting the travel distance, for example, from a number of revolutions of a wheel and the like.

The information memory device 3 is an external storage device in which programs and data for navigation are stored, for example, comprising a CD-ROM and the like. The stored programs therein include a program for performing processing, such as a route search etc., a processing program as shown in a flowchart described in this embodiment, a program for performing this display output control necessary for route guidance and performing guidance in the interactive manner by the voice input and necessary data therefor, and a program for performing the voice output control necessary for the voice guidance and necessary data therefor. The data to be stored therein are composed of files, such as map data, retrieval data, guidance data, map matching data, destination data, register point data, road data, image data of junction points, such as intersection etc., genre data, landmark data and the like, in which all the data necessary for navigation are stored. The map data is divided into each predetermined unit and stored in the form of rectangular. In addition, the invention can be applied to a kind of system in which the CD-ROM only stores the data and the central processing unit stores the programs. Here, the CD-ROM is exemplified as the information memory device, however, it may be replaced to an optical disc, such as a DVD-ROM etc., a magnetic disc, such as a floppy disc etc., or a magneto-optical disc etc., such as a MO etc.

The central processing unit 4 comprises: a CPU for performing various calculation processing; a flash memory for reading and storing the programs from the CD-ROM of the information memory device 3; a ROM for storing a program (or program reading means) for checking and updating the programs contained in the flash memory; a RAM for temporarily storing the searched route guidance information, such as point coordinates of the determined destination, a road name code NO., and the like, or data under the calculation processing. Although the figures are omitted, said central processing unit further provides a flash memory for storing data reproduced in the output device, such as a display and the like, voice processor for performing the communication processing by the voice input from the input device 1, for synthesizing a voice, a phrase, one sentence, a sound and the like read from the information memory device 3 on the basis of the voice output control signals from the CPU and transforming into analog signals and outputting to the speaker, a communication interface for transferring the input/output data, a sensor input interface for receiving the sensor signal of the present position detector 2, and a clock for writing the date and time in internal diagnosis information. In addition, said programs for said updating processing may be stored in an external memory device.

The programs according to the present invention and the other programs for executing navigation may be wholly stored in a CD-ROM as an external memory medium, or they may be partially or wholly stored in the ROM 42. The data and programs as stored in the external memory medium, are input as external signals to the central processing unit of the navigation system and processed by calculation so that various navigation functions are realized.

As described above, the navigation system embeds therein the flash memory having a relatively large capacity for reading programs from the CD-ROM of the external memory device and the ROM having a small capacity that stores a program (or program reading means) for performing an initiation processing of the CD. The flash memory is nonvolatile memory means for maintaining the stored information even if the power is turned off. And, as the initiation processing of the CD, the program stored in the ROM or in another word, the program reading means are initiated to check the programs stored in the flash memory and read the disc managing information etc. stored in the CD-ROM of the information memory device 3. The loading processing (or updating processing) of the programs is performed by the judgment on this information and the state of the flash memory.

The information transmitter/receiver 5 comprises a GPS receiver for obtaining information by making use of the satellite navigation system (GPS), a VICS receiver for obtaining information by making use of FM multi-channels, electric beacons, light beacons etc., a data transceiver is exemplified by a portable telephone, a personal computer, etc. for exchanging the information with an information center (e.g., ATIS) or other vehicles, and the like.

The output device 6 is provided with functions for outputting voice/display guidance information as required by the driver and for outputting the navigation data processed in the CPU 4 to the printer. As means for realizing these functions, the output device 6 comprises a memory for drawing data processed in the CPU 4 or data stored in the information memory device 3 in order to display on a screen, a display for displaying image data drawn in the memory, a printer for outputting the data processed in the CPU 4 or the data stored in the information memory device 3 and printing out, a speaker for outputting route guidance by voice, and the like.

The display includes a color CRT or liquid-crystal display device etc., and displays screens showing enlarged intersections, destination names, time, distances, travel direction arrows and the like on the basis of the map data or guidance data to be processed by the CPU 4. Image data to be transmitted to the display are binary image data (bitmap data), and display data or guidance data of the map processed by the CPU 4 are received through a communication line used for a serial communication etc. or through the sharing of other communication lines, then the received data therein are drawn in the memory within the output system 6, and after that, the data within the instructed display limit are displayed on the screen.

That display is mounted in the instrument panel in the vicinity of the driver's seat so that the driver is able to confirm the present position of his vehicle and to obtain information on a next route to follow. Moreover, the display may be composed that points or roads etc. can be input by touching or tracing the screen with making use of a tablet including a touch panel, a touch screen etc. on the display screen, a detailed description thereof is omitted.

Fig. 2 is a flowchart describing the entire navigation system according to the present invention. A program for route guidance is started as the program read from the information memory device 3 into the central processing unit 4, then a present position is retrieved by the present position detector 2 and the name of the present position and the like is displayed simultaneously while displaying a vicinity map with the present position being placed at its center (step S2). Next, a destination is set by use of name of the destination such as area name, facility name etc., telephone number, address, registered point, road name or the like (step S3), route from the present position to the destination is retrieved (step S4). As the route is determined, route guidance/display is repeated until the vehicle reaches the destination while the present position is traced by the present position detector 2 (step S5). When a stop setting is input before reaching the destination, a retrieval area is set and re-retrieval is performed in that retrieval area and in the same way, route guidance is repeated until the vehicle reaches the destination.

The point retrieval output system by a telephone number according to the present invention judges whether a subscriber of the input telephone number is a subscriber of a telephone number given no restriction such as an entrepreneur, or a subscriber of a telephone number given restriction such as a private subscriber when retrieving a point, setting the point and performing guidance in a map by inputting the telephone number. Then, if the subscriber is an entrepreneur, information on a point of that subscriber is output (displaying, guiding and setting a point), and if the subscriber is a private subscriber, information on a point of that subscriber is output under a fixed condition, for example, the name of the subscriber is input. The output of information on the point of subscriber is carried out as a name of a facility such as a store, a firm or the like is displayed when the subscriber is an entrepreneur, or a personal name or an address is displayed when the subscriber is a private subscriber, then a map showing a point of that subscriber being located at its center is displayed. Further, the input of a point such as a destination or via points is carried out by inputting a point and setting the input point as a destination and the like. A condition required for the private subscriber is, for example, that a name of the subscriber is input, and if the input name of the subscriber matches with the name of the subscriber of the telephone number, then, for example, the telephone number and the name of the subscriber or the address are displayed, after that, a map showing a point of that subscriber being located at its center is displayed and the point can be set. If the name of the subscriber does not match, a message thereof or an alarm is output. Further, when the user makes an input error, it can be dealt by inputting the name of the subscriber or the telephone number once again.

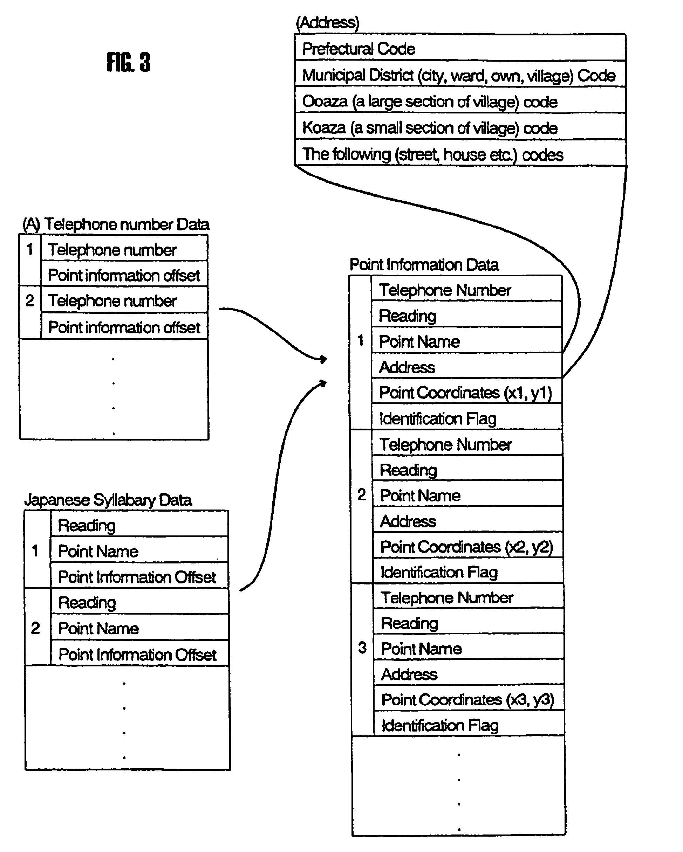

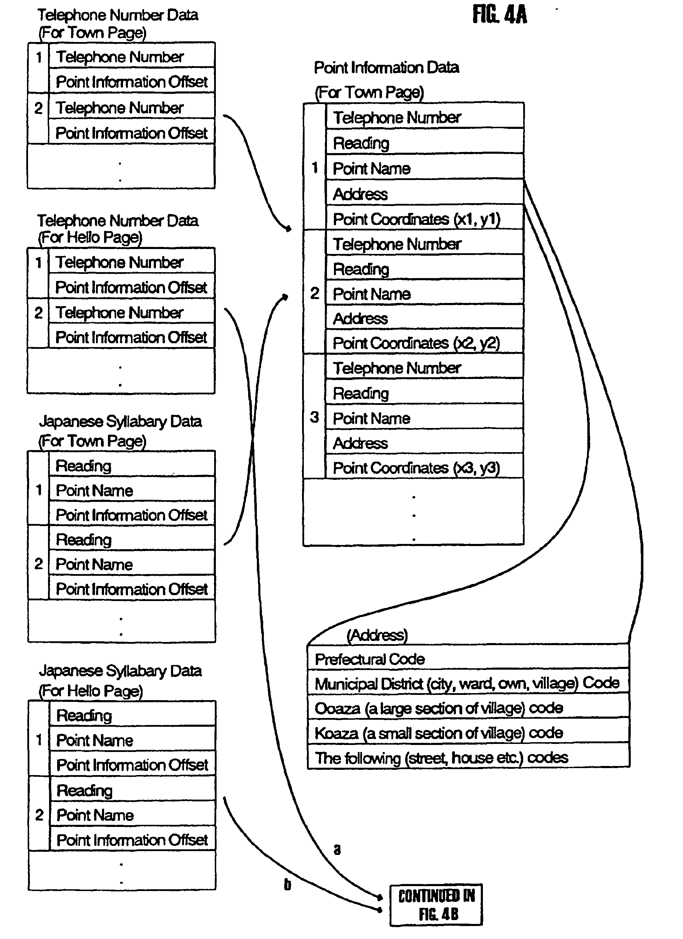

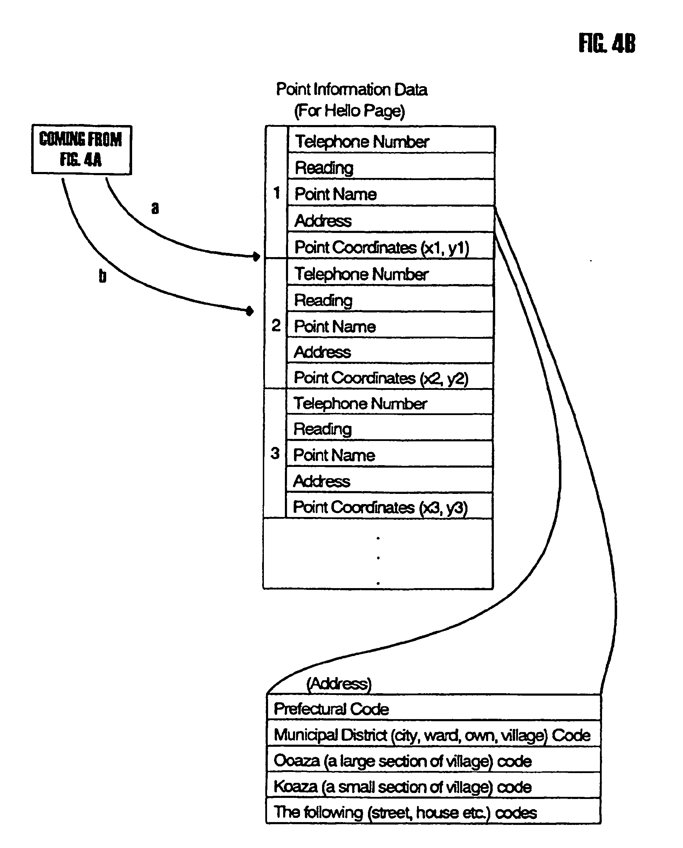

Fig. 3 is a diagram showing an example of data structure to be used for a point retrieval output system by a telephone number according to the present invention, and Fig. 4 is a diagram showing an example of data structure divided into data for the town page and the hello page.

Data to be used for a point retrieval output system according to the present invention by a telephone number include telephone number data, Japanese syllabary data and point information data as shown in Fig. 3. Further, the telephone number data are data in which telephone numbers and point information data offset are stored, and the point retrieval output system performs retrieval when a telephone number is input and point information data are obtained on the basis of point information data offset of that telephone number. The point information data offset is to show for example, stored address of point information data. These telephone number data and point information data are determined as retrieval data, thereby, as a telephone number is input, point information data offset of the hit (matching) telephone number is retrieved and various information on the point (a point name, an address or etc.) is retrieved from the point information data on the basis of that point information data offset and the retrieved various information is displayed with a map. The Japanese syllabary data are data in which readings or point names of subscribers of telephone numbers are in order of Japanese syllabary and stored with the point information data offset, wherein the point retrieval output system performs retrieval when a reading or a point name is input and point information data are obtained on the basis of the point information data offset of that reading or point name. Here, the point name is a facility name, a personal name or the like.

Point information data are data in which information on a point of a telephone subscriber such as point names, addresses, point coordinates (x, y) etc., is stored in order of telephone numbers or Japanese syllabary, or by grouping respective addresses as well as identification flags are stored therein. When inputting telephone numbers and readings or point names stored in telephone number data and Japanese syllabary data, the address is used for example, for outputting as confirming information and a code is given to each hierarchy of the address, such as "Aichi-Prefecture" is 23 and "Okazaki-City" is 202. Further, point coordinates are used for example, for displaying a map showing that point being located at its center or displaying that point by putting a mark on the map.

The identification flag is provided to classify subscribers, for example, which classifies whether a subscriber of a telephone number is a subscriber given restriction, namely, a private subscriber, or given a no restriction, namely, an entrepreneur. Therefore, if according to telephone directories, data of one of the telephone directories such as called the town page (a name of the registered trademark of NTT, hereafter called) are data of entrepreneurs of facilities, shops, firms and the like so that they are given no restriction, and data of the other telephone directory such as called the hello page (a name of the registered trademark of NTT, hereafter called) are data of private homes so that they are given restriction, on which identification flags are set, however, no doubt, this is an excitation, identifying information of restriction or no restriction may be set on the basis of other classification or division. And, if the telephone number is given no restriction as mentioned above, point information is immediately provided, and if the telephone numbers is given restriction, the name of the subscriber is checked and point information is provided according to the hit. Further, when an address is displayed on a screen with letters, it may be constructed that the letters are converted from codes by use of a separately stored address database.

Fig. 4 is a set of block diagrams showing an example of data structure by dividing respectively the above telephone number data, Japanese syllabary data and map information data into data for the town page given a setting of no restriction and data for the hello page given a setting of restriction. In this case, identifying information for classifying whether data for the town page or data for the hello page set as the point information data is not required. Therefore, when such a data structure is used, selecting an input mode whether it is for inputting a telephone number in the town or the hello page, namely, whether it is for inputting a telephone number giving no restriction or restriction and it can be constructed that retrieval is performed by determining an offset of the telephone number on the basis of that selection.

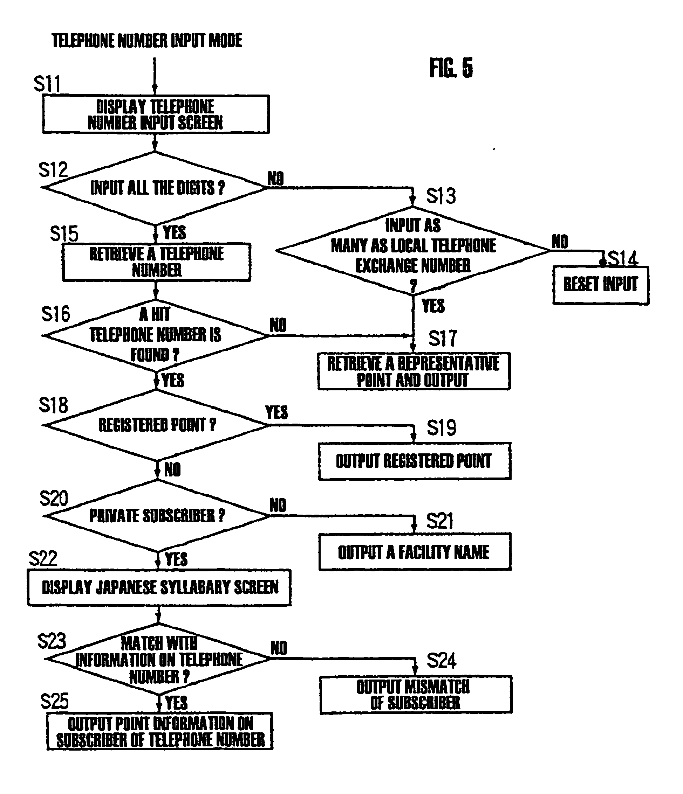

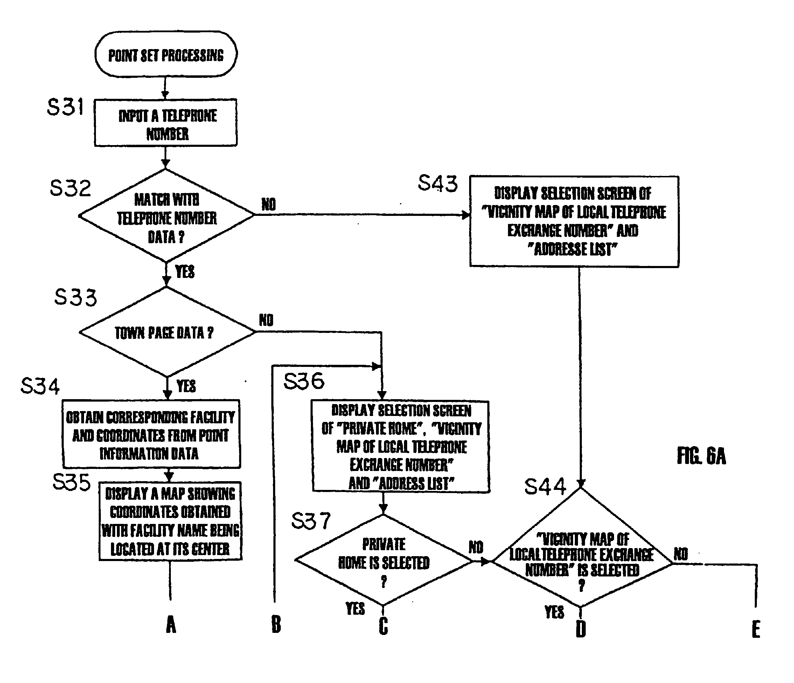

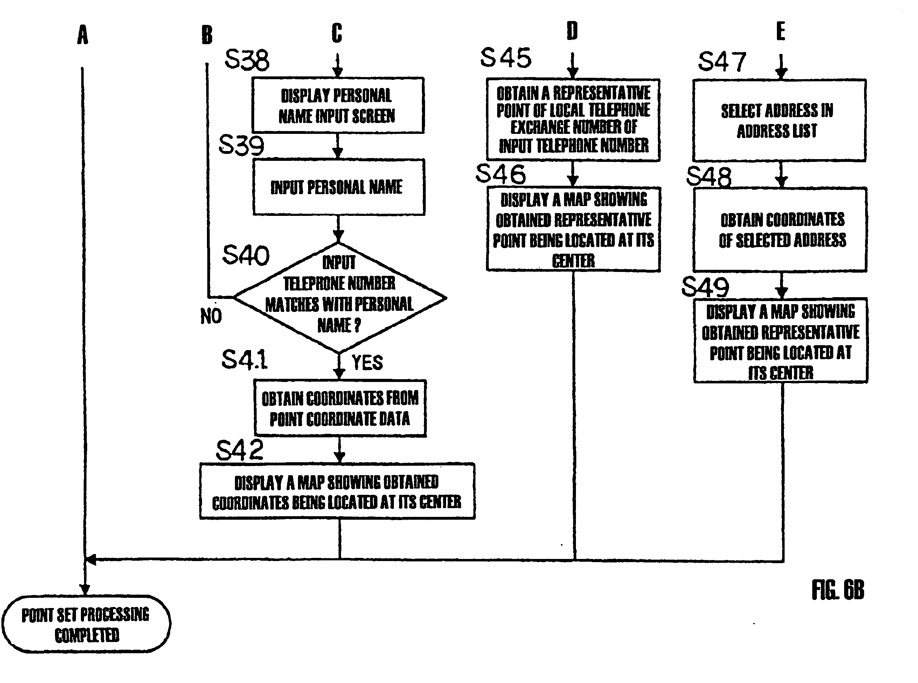

Next, it is described about an example of retrieval and guidance processing in the telephone number input mode with making use of the above retrieval data. Fig. 5 is a flowchart showing an example of the retrieval and guidance processing in the telephone number input mode, and Fig. 6 is a flowchart showing an example of point setting processing in the telephone number input mode.

As shown in Fig. 5, firstly, the telephone number input mode displays a telephone number input screen (step S11), as the telephone number is input, it is then judged whether all the digits, namely 9 or 10 digits of which numbers differ according to areas, are input or not (step S12). If all the digits of the telephone number are not input, it is judged whether or not the digits are input as many as digits of local telephone exchange number (step S13), if the digits of the telephone number are not input as many as the digits of the local telephone exchange number, the input is reset (set S14), for example, the process returns to a telephone number re-input mode by informing with a beeping sound. If the digits of the telephone number are input as many as the digits of the local telephone exchange number, a representative point is retrieved and information on that point is output (step S17).

If all the digits of the telephone number are input, retrieval is performed in the telephone number data (step S15), it is then judged whether or not a hit telephone number is found (step S16). If no hit telephone number is found, in the same manner as the telephone number that is input as many as the digits of the local telephone exchange number, a representative point is retrieved and information on that point is output (step S17). If a hit telephone number is found, it is then judged whether or not the hit telephone number is a registered point (step S18), if it is a registered point, information on the registered point is output (step S19), and if it is not a registered point, it is judged whether or not a subscriber of the telephone number is a private subscriber (step S20). Additionally, judging whether or not it is a registered point, may be performed with reference to a list of the registered points (not shown by a diagram) or with reference to identification flags to which information on the registered points are given.

If the subscriber is an entrepreneur, a name or an address of the facility is output (step S21), if the subscriber is a private subscriber, a screen showing the Japanese syllabary is displayed (step S22), as a personal name is input, the personal name is checked with a name of the subscriber of the pre-retrieved telephone number and then it is judged whether they match each other (step S23). If there is a match with the name of the subscriber, point information on the subscriber of the input telephone number is output (step S25), and if there is not a match with the name of the subscriber, a mismatch of the subscriber is informed with a beeping sound and a message thereof is output (step S24). With regard to a telephone number input or Japanese syllabary input, several suggestions thereof have been already made by the present applicant, therefore, the description is omitted (see for example, Japanese Patent Laid Open No. Heisei 8-94377 and No. Heisei 9-97226 for reference).

Further, a point set processing by inputting a telephone number is described as follows; as shown in Fig. 6, when a telephone number is input (step S31), it is judged whether or not the input number matches with telephone number data (step S32). If it matches with the telephone number data, it is further judged whether or not the matched number is found in the town page data (step S33), if it is found in the town page data, the corresponding facility name and coordinates are obtained from point information data (step S34), and a map showing the coordinates obtained with the facility name being located at its center is displayed and a point is set (step 535).

If the input telephone number is not found in the town page data upon the judgment made at step S33, namely, it is found in the hello page data, a selection screen showing for example, "private home", "vicinity map of local telephone exchange number" and "address list" is displayed (step S36), and it is then judged whether or not "private home" is selected (step S37). If "private home" is selected, a personal name input screen is displayed (step S38), an input processing of the personal name is performed (step S39) and it is judged whether or not the input telephone number matches with the personal name (step S40). If it does not match, return to step S36, and if it matches, coordinates are obtained from map coordinate data (step S41), a map showing the obtained coordinates being located at its center is displayed and a point is set (step S42).

If the input telephone number does not match with the telephone number data, a selection screen of "vicinity map of local telephone exchange number" and "address list" is displayed (step S43) and it is judged whether or not "vicinity map of local telephone exchange number" is selected (step S44). Further, this judgment processing is also performed when "private home" is not selected at step S37.

If "vicinity map of local telephone exchange number" is selected at step S44, representative coordinates of the local telephone exchange number of the input telephone number are obtained (step S45), and a map showing the obtained coordinates being located at its center is displayed and a point is set thereon (step S46). Further, if "address list" is selected, an address is selected in the address list (step S47), coordinates of the selected address are obtained (step S48), and a map showing the obtained coordinates being located at its center is displayed and a point is set thereon (step S49).

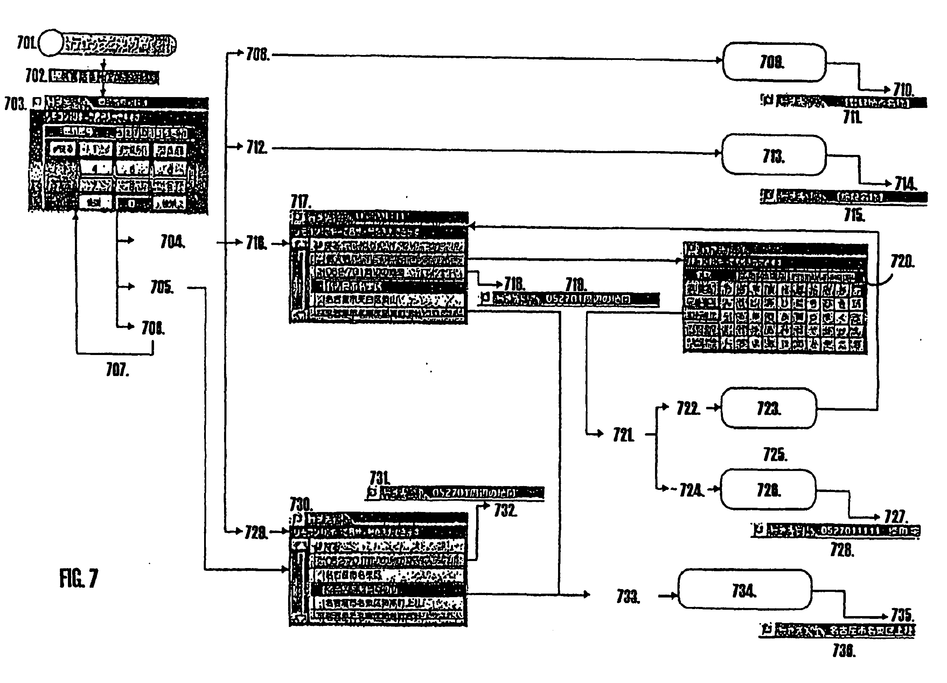

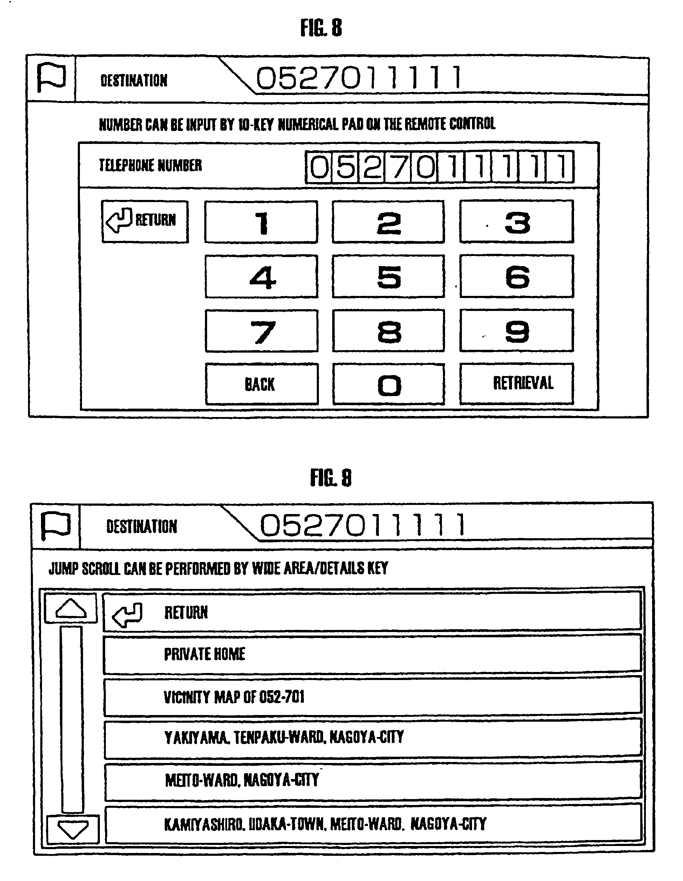

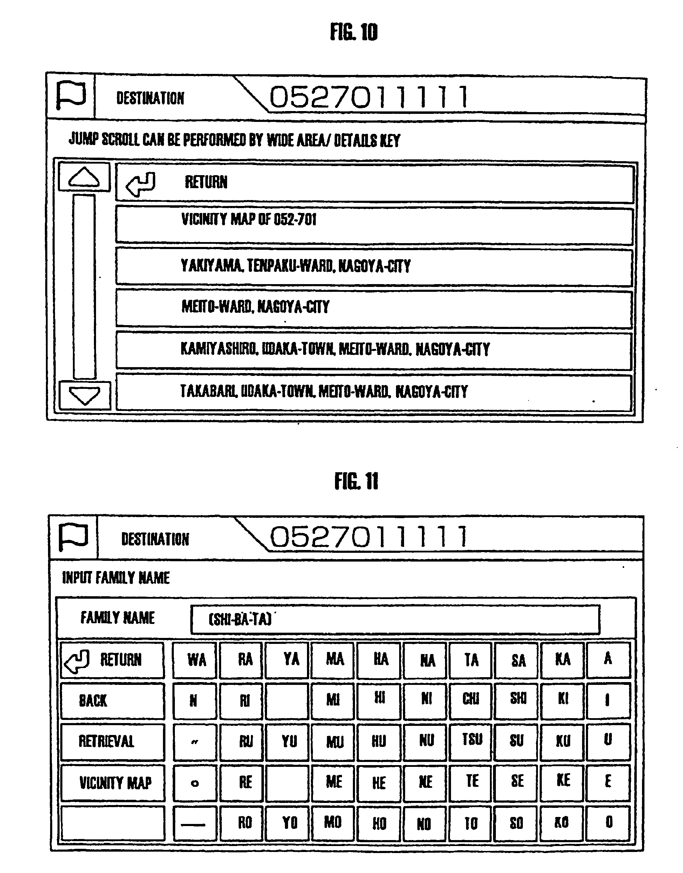

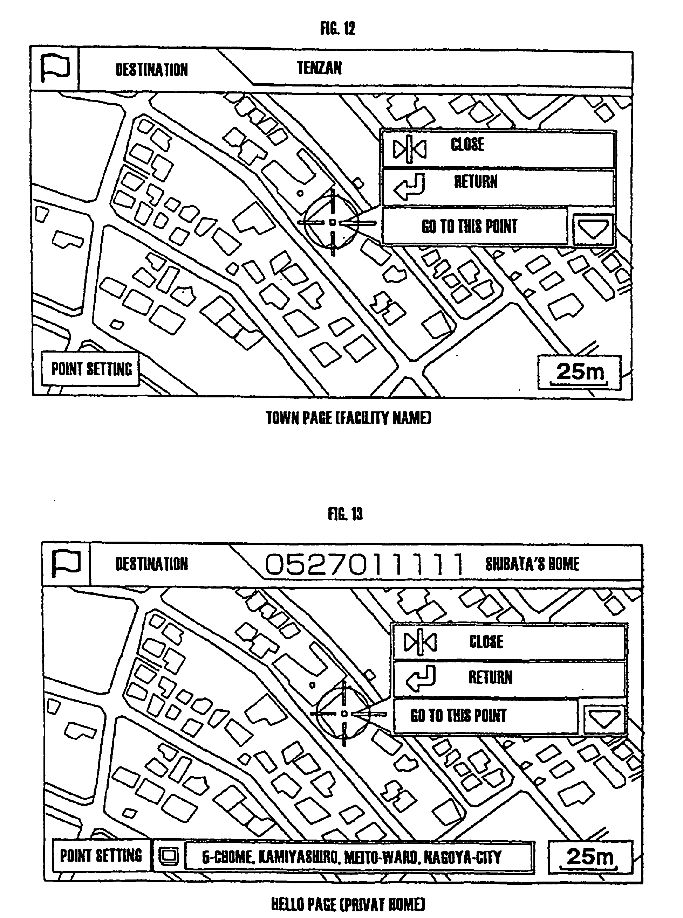

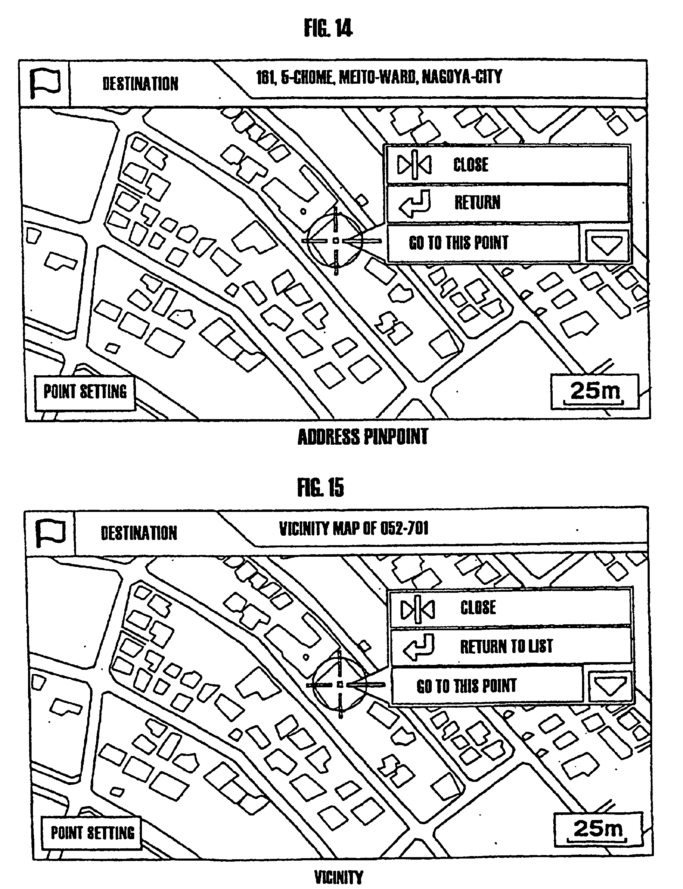

The present invention is further described on the basis of concrete screens and examples of those screen changes. Fig. 7 is a diagram describing examples of the screen changes when a destination is determined by a point setting, Fig. 8 is an example of telephone number input screen, Fig. 9 is a diagram showing an example of selection screen to be displayed when a hit telephone number is found in the hello page, Fig. 10 is a diagram showing an example of selection screen to be displayed when no hit telephone number is found or digits of the telephone number is input as many as the local telephone exchange number, Fig. 11 is a diagram showing an example of Japanese syllabary screen, Fig. 12 is a diagram showing an example of map display screen for displaying a facility name, Fig. 13 is a diagram showing an example of map display screen for displaying a private home, Fig. 14 is a diagram showing an example of map display screen for displaying an address with a pinpoint, and Fig. 15 is a diagram showing an example of vicinity map display screen for displaying a vicinity map on the basis of representative coordinates.

In the telephone number input mode, a telephone number input screen as shown in Fig. 8 is displayed. The telephone number input screen is divided into respective areas comprising a message area, an input display area and a keypad input area. Therein, "Number can be input by 10-key numerical pad on the remote control." is displayed in the message area, the input telephone number "0527011111" is displayed in the input display area, and the 10-key numerical pad for inputting numbers, return key for returning to a previous screen or mode, back key for backing up the digits and re-inputting in case of an improper input and retrieval key for starting retrieval of the input sequence of numbers as a telephone number are set and displayed. In this screen, as numbers are input by the 10-key numerical pad an retrieval key is input, retrieval is started, and the following step is branching off depending on the input numbers whether they are 9 or 10 digits, or whether or not they are input as many as the digits of the local telephone exchange number as shown in Fig. 7.

When a 9 or 10-digit number is input, the following processing is performed according to whether a hit telephone number is found in any of the registered points, the town page and the hello page or no hit telephone number is found. As shown in Fig. 7, if a hit is found in the registered points, a destination setting is made with a registered point name and the telephone number input screen is changed to a destination map display screen, if a hit is found in the town page, a destination setting is made with a facility name and the screen is changed to a destination map display screen shown in Fig. 12, if a hit is found in the hello page, the screen is changed to a selection screen shown in Fig. 9 and if no hit is found, the screen is changed to a selection screen shown in Fig. 10. Further, if a number of the digits is input as many as the local telephone exchange number, the screen is changed to the selection screen shown in Fig. 10 and if the number is not input as many as the local telephone exchange number, a beeping sound is output and the input is reset and after that return to a processing of the telephone number input screen shown in Fig. 8.

The selection screen shown in Fig. 9 to be displayed when a hit is found in the hello page, is a screen to select whether a map of private home is displayed, a vicinity map of the local telephone exchange number (052-701) is displayed or a map of an address by selecting the address within the area since the telephone number is a telephone number of a private subscriber given restriction in providing information. At this stage, "private home" is selected, the screen is changed to a Japanese syllabary input screen shown in Fig. 11. If family name, full name or first letter of the subscriber name is input by Japanese syllabary in the Japanese syllabary screen, a matching between the telephone number and the subscriber name is judged and as shown in Fig. 13, a pin point is displayed in a map with the telephone number, the subscriber name, and further the address according to that matching. Therefore, a destination is determined upon selecting "go to this point". However, if there is a mismatch with the telephone number subscriber, it is returned to processing in the selection screen shown in Fig. 9 after displaying a message such as "the input telephone number does not match with a subscriber".

Further, if "Vicinity map of 052-701" is selected in the selection screen shown in Fig. 9, the screen is changed to a vicinity map of the local telephone exchange number display screen shown in Fig. 15 and if "address list" is selected, the screen is changed to a map display screen shown in Fig. 14 in which a destination can be set by an address comprising prefecture, city, town, village, number, ooaza (a large selection of village), koaza (a small selection of village), lot number and the like. A screen change by selecting "vicinity map " or "address list" is same as a screen change made from the selection screen shown in Fig. 10.

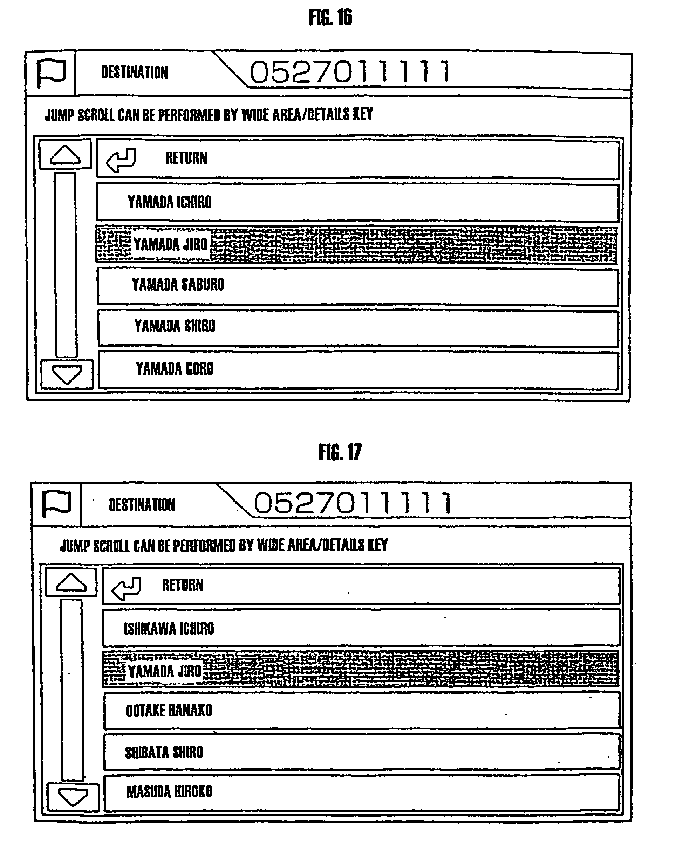

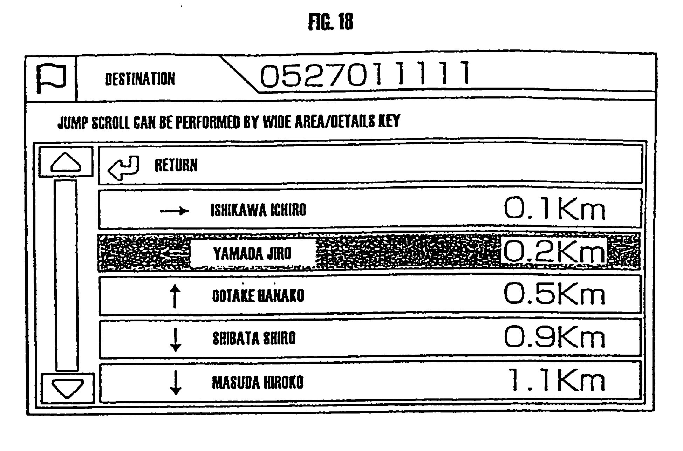

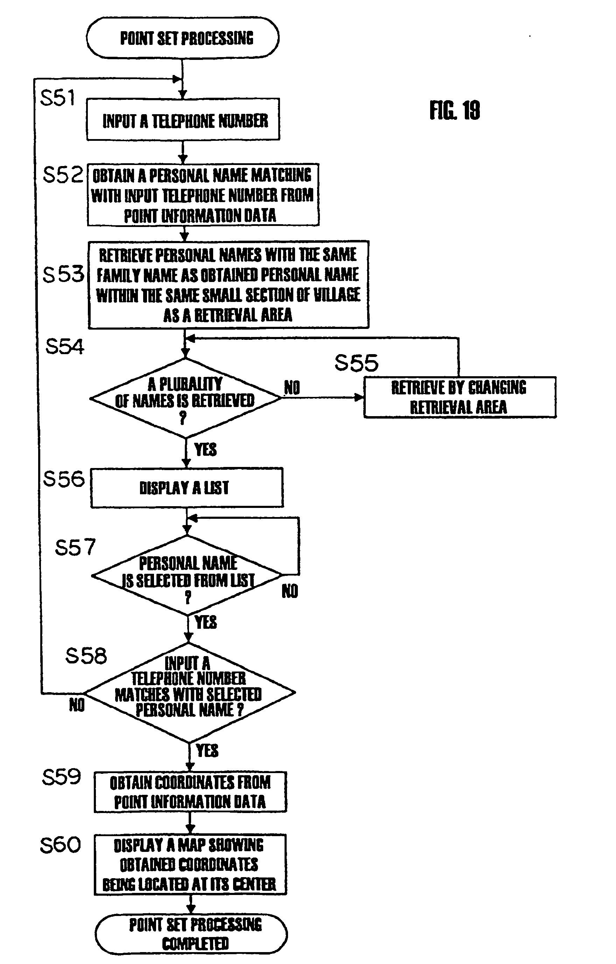

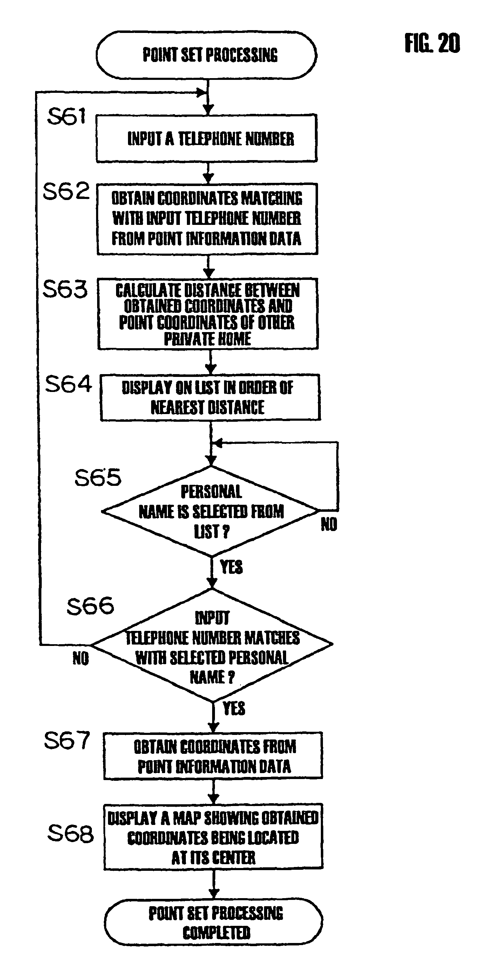

Fig. 16 is a diagram showing an example of list of same family name to be displayed if a hit is found in private homes, Fig. 17 is a diagram showing an example of list of neighbouring private homes, Fig. 18 is a diagram showing an example when distances and directions from a specific point are added to the list shown in Fig. 17, Fig. 19 is a flowchart describing an example of processing when a list of same family names is output and Fig. 20 is a flowchart describing an example of processing when a list of neighbouring private homes is output.

According to the above pattern, when retrieval is performed by inputting a telephone number, if a subscriber of the telephone number is given restriction, a subscriber name, a first letter or a family name is input and point of the subscriber of the input telephone number is displayed in a map with a pinpoint on the basis of the match between the input item and the subscriber of the input telephone number, however, in this case, it may be performed by displaying a list and inputting a designated item from the list, instead of the Japanese syllabary input. For example, when a subscriber name is input, similar names or same family names shown in Fig. 16 are retrieved in the vicinity and displayed in a list and if a subscriber name different from the subscriber name of the input telephone number is designated and input, mismatch processing is performed. Therefore, if a plurality of items cannot be retrieved in a certain area, the area may be enlarged gradually from koaza → ooaza → city → tow → village → prefectureby or koaza → neighbouring koaza in a circle, a rectangle or a polygon with the point of the corresponding telephone number subscriber being located at its center.

Further, if a hit is found in private homes by the telephone number input, a plurality of private homes in the vicinity of the hit private home may be retrieved and a list thereof may be displayed as shown in Fig. 17. Further, a list may be displayed with distances and directions from a specific point as shown in Fig. 18. Of course, in addition to the list, respective points may be displayed in a map. When a hit is found in the private homes, an address, an initial, a first letter, a postal code or the like may be used as specific information instead of a name of private home since the purpose of the specific information for specifying the subscriber is directed to input to release restriction on a telephone number of the subscriber and thus concrete information is provided by the matching between the specific information and the subscriber. Said neighbouring retrieval area may be based on a simple distance from the hit private home or a distance from the hit private home within a town.
A processing performed when a list of same family names is output as above, a telephone number is input as shown in Fig. 19 (step S51), a personal name corresponding to the input telephone number is obtained from point information data (step S52), personal names of the same family name as the obtained personal name are retrieved within the same small section of village as a retrieval area (step S53). It is judged whether or not a plurality of personal names are retrieved (step S54), if a plurality of personal names is not retrieved, the retrieval area is changed until a plurality of names is retrieved (step S55) and when a plurality of personal names is retrieved a list thereof is displayed (step S56). Then, it is judged whether or not a personal name is selected from the list (step S57), and it is further judged whether a subscriber of the input telephone number matches with the selected personal name (step S58). If mismatched, return to step S51 for inputting a telephone number again and if matched, coordinates are obtained from point information data (step S59), a map showing the obtained coordinates being located at its center is displayed (step S60) and point setting processing is completed. Further, if mismatched, processing may return to a selection screen shown in Fig. 9.

A processing performed when a list of neighbouring private homes is output, for example, a telephone number is input (step S61), coordinates corresponding to the input telephone number are obtained (step S62), distances from the obtained coordinates to point coordinates of other private homes within a predetermined area are calculated (step S63) and a list of private homes is displayed in order of shortest distance (step S64). Then, it is judged whether or not a personal name is selected from the list (step S65), it is further judged whether or not the subscriber of the input telephone number matches with the selected personal name (step S66). If mismatched, return to step S61 for inputting a telephone number again and if matched, coordinates are obtained from point information data (step S67) and a corresponding map is displayed (step S68) and point setting processing is completed. Further, if mismatched, processing may return to a selection screen shown in Fig. 9.

The present invention is not limited to the above embodiments, various changes can be made. For example, in the above embodiments, a telephone number and a reading or a point name, an address, point coordinates, identifying information are stored as point information data, guide information such as a content, a type or the like of business may be stored if a subscriber is of a store, or guide information is separately stored and offset information of that guide information may be stored in the point information data. Further, identifying information is stored in the point information data, however, it may be stored in telephone number data or it may be constructed that subscribers are divided into several classifications such as private, registered, public facility, store and identifying information is set according to the classifications.

Further, it is described that a full name, a family name, or a first letter is input by the Japanese syllabary when a subscriber name is input. However, needless to say, if any information that can specify a subscriber together with a telephone number such as a private home, namely, various information that can be checked with retrieval information by a telephone number such as a name, Kanji (Chinese characters), Roman letters, an initial, a first name, a middle name, a family name, an address, prefecture, a state name, a city name, a town name, a street name, a postal code, sex, a blood type, birthday, one's company, one's school, e-mail address (complete address inclusive of @), an identification number or the like, which may be used as specific information for specifying a subscriber.

Further, according to the present invention, an input telephone number is retrieved in telephone number data and a subscriber name of the input telephone number is checked if the subscriber is a private subscriber, therefore, identifying information may be stored in telephone number data, if the subscriber is a private subscriber, specific information of the private subscriber may be stored with the identifying information in the telephone number data. In this manner, whether or not a subscriber is a private subscriber is immediately identified, and further, when a name of the subscriber is required to be checked, it can be checked merely by making retrieval in the telephone number data. Further, Japanese syllabary data may be used as facility name retrieval data. Official names and popular names or nicknames are stored respectively in reading data such as "Nagoya Tetsudo" and "Meitetsu" (Nagoya Railway), "Kansai Kokusai Kuko" and "Kanku" (Kansai International Airport), thus retrieval can be made by inputting any names.

### Effects of the Invention

As it is obvious from the above descriptions, according to the present invention, it is a point retrieval output system by a telephone number for retrieving information on a point of a subscriber of the corresponding telephone number and outputting said information, comprising memory means for storing specific information for specifying at least a telephone number and a subscriber and information on a point of the subscriber, input means for inputting specific information for specifying a telephone number or a subscriber, retrieval means for retrieving information on the point of the subscriber on the basis of the telephone number to be input by the input means and the specific information for specifying the subscriber, and output control means for controlling an output of information on the point of the subscriber retrieved by the retrieval means on the basis of the input of the telephone number and the specific information for specifying the subscriber, therefore, it is no longer problem that a point different from a point desired by the user is displayed and guided if a telephone number is wrongly input, further, when information on the point of the subscriber is output, the user is relieved about being able to proceed to his/her desired point and to confirm it as being convinced that the information is correct. Further, if the telephone number subscriber is a private subscriber, information is not socially opened in public, who is different from an entrepreneur of a firm, a store, a facility or the like, therefore, retrieval is automatically and unconditionally performed from the input private telephone number and no personal information thereon is output, which is considered to be desired in view of privacy, however, the present invention is to judge whether the input telephone number matches with the specific information for specifying a subscriber and to control that personal information thereon is output if matched, thus a problem of privacy can be solved.

The present invention is provided that a telephone number and other information on a subscriber of that telephone number are input and checked, thereby, retrieval and guidance by inputting a telephone number are properly performed.

The present invention comprises memory means 3 for storing specific information for specifying at least a telephone number and a subscriber and information on a point of the subscriber, input means 1 for inputting the specific information for specifying the telephone number and subscriber, retrieval means 4 for retrieving information on the point of the subscriber on the basis of the telephone number input by input means 1 or specific information for specifying the subscriber, output control means 4 for controlling an output of information on the point of the subscriber retrieved by retrieval means on the basis of the inputs of the telephone number and the specific information for specifying the subscriber, wherein the present invention retrieves information on a point of the subscriber of the hit telephone number by inputting the telephone number and according to classification of the subscriber whether the subscriber is a private subscriber, a facility, or an entrepreneur of firm, shop or the like, the invention further controls an output of personal information on condition that a name of the subscriber is input when the subscriber is a private subscriber.

### List of reference signs of Fig. 7

701. Determine a destination.
702. Retrieve a telephone number.
703. Screen of Fig. 8.
704. Input 9 or 10-digit number.
705. Numbers are already input as many as local telephone exchange number.
706. Numbers are not input as many as local telephone exchange number.
707. Return after input reset (+ Beeping sound).
708. A hit is found in registered points.
709. Hit "Registered point name" is determined and set as a destination.
710. Display a map.
711. Destination (registered point name).
712. A hit is found in the town page.
713. Hit "Facility name" is determined and set as a destination.
714. Display a map.
715. Destination (Facility name).
716. A hit is found in the hello page.
717. Screen of Fig. 9.
718. Display a vicinity map.
719. Destination Vicinity map of 052701.
720. Screen of Fig. 11.
721. Check the content.
722. Mismatch.
723. Input telephone number not match with subscriber.
724. Match.
725. Match requirement:
   Do not discriminate voiced consonants or Japanese voiceless bilabial consonants.
726. "0527011111 Shibata's home" is determined and set as a destination.
727. Display a destination map.
728. Destination 052077777 Shibata's home.
729. No hit telephone number is found.
730. Screen of Fig. 10.
731. Destination Vicinity map of 052701.
732. Display a vicinity map.
733. Address list.
734. "xx-Prefecture, xx-City, xx, xx-Chome, xx" is determined
   and set as a destination.
735. Display a map.
736. Destination Nagoya-City, Meito-Ward, Kamiyashiro, 5-Chome"

## Claims

1. A point retrieval output system by a telephone number for inputting a telephone number, retrieving information on a point of a subscriber of that telephone number and outputting said information, said point retrieval output system by a telephone number, comprising:
memory means (3) for storing at least telephone numbers, specific information for specifying the subscribers, information on the points of the subscribers, and identifying information for classifying the subscriber of the telephone number;
input means (1) for inputting a telephone number or the specific information for specifying the subscriber;
retrieval means (4) for retrieving information on the point of the subscriber on the basis of the telephone number or the specific information for specifying the subscriber input by said input means (1); and
output control means (4, 6) for judging said identifying information when the telephone number is input and, under the condition that specific information for specifying the subscriber is input on the basis of said judgment, for controlling an output of information on the point of the subscriber retrieved by said retrieval means (4) on the basis of the inputs of the telephone number and specific information for specifying the subscriber,
wherein said identifying information is indicative of presence and absence of restriction, wherein a telephone number of a private subscriber is given a setting of restriction and a telephone number other than telephone numbers of private subscribers is given a setting of no restriction.

2. The point retrieval output system by a telephone number according to claim 1, wherein said output control means (4, 6) output information on the point of the subscriber of the telephone retrieved under the condition that said identifying information is of no restriction.

3. The point retrieval output system by a telephone number according to claim 1, wherein said output control means (4, 6) judge a matching of the specific information for specifying the subscriber of the telephone number by inputting the specific information for specifying the subscriber of the telephone number under the condition that said identifying information is of restriction and output the information on the point of the matching subscriber.

4. The point retrieval output system by a telephone number according to claim 1, wherein said output control means (4, 6) display a menu for selecting private home or vicinity of local telephone exchange number under the condition that said identifying information is of restriction.

5. The point retrieval output system by a telephone number according to claim 4, wherein a matching of the specific information for specifying the subscriber of the telephone number by inputting the specific information for specifying the subscriber is judged and information on the point of the subscriber of the matching telephone number is output when a private home selected.

6. The point retrieval output system by a telephone number according to claim 1, wherein said output control means (4, 6) display a menu for selecting vicinity of local telephone exchange number when the telephone number cannot be retrieved or the digits of the telephone number is input only as many as the local telephone exchange number.

7. The point retrieval output system by a telephone number according to claim 4 or 6, wherein said memory means (3) store map data and said output control means (4, 6) output a vicinity map when the vicinity of the local telephone exchange number is selected or a vicinity map by inputting the address within the local telephone exchange number.

8. The point retrieval output system by a telephone number according to claim 3 or 6, wherein the input of the specific information for specifying said subscriber is to input at least a part of a name of the subscriber with the Japanese syllabary.

9. The point retrieval output system by a telephone number according to claim 1, wherein said memory means (3) store identifying information for classifying the subscriber of the telephone number.

10. The point retrieval output system by a telephone number according to claim 9, wherein said identifying information is information for classifying whether or not the subscriber is a private subscriber.

11. A point retrieval output system by a telephone number according to claim 1, wherein said memory means (3) store pre-registered point information and said output control means (4, 6) output that point information when the telephone number retrieved by said retrieval means have said point information.

12. The point retrieval output system by a telephone number according to claim 1, wherein said memory means (3) store map data, at least an address or name as information on the point of the subscriber and point coordinates, and said output control means (4, 6) display a map on the basis of said point coordinates after said address or name is displayed when information on the point of said subscriber is output.

13. The point retrieval output system by a telephone number according to claim 1, wherein said memory means (3) store point information data having at least telephone numbers, readings or point names, addresses and point coordinates, telephone number data for retrieving a telephone number and Japanese syllabary data for retrieving a reading or a point name.

14. A point retrieval output system by a telephone number according to claim 1, wherein said output control means (4, 6) further comprises
point setting means for setting information on the point of the subscriber output by said output control means as a guide destination.

15. A computer readable memory medium in which data for the point retrieval output system by a telephone number for retrieving information on a point of a subscriber of a telephone number upon an input of the telephone number and programs are stored, wherein said computer readable memory medium contains data having at least the telephone number, specific information for specifying the subscriber, information on the point of the subscriber, and identifying information for classifying the subscriber of the telephone number;
a retrieval program for realizing a function for retrieving information on the point of the subscriber on the basis of the telephone number and specific information for specifying the subscriber to be input; and
an output control program for judging said identifying information when the telephone number is input and, under the condition that specific information for specifying the subscriber is input on the basis of said judgment, for realizing a function for controlling an output of information on the point of the subscriber retrieved by said retrieval program on the basis of the telephone number and the specific information for specifying the subscriber to be input,
wherein said identifying information is indicative of presence and absence of restriction, wherein a telephone number of a private subscriber is given a setting of restriction and a telephone number other than telephone numbers of private subscribers is given a setting of no restriction.

16. A computer readable memory medium according to claim 15, wherein the medium contains data having a data structure, wherein identifying information for classifying a subscriber of a telephone number is stored.

17. A computer readable memory medium according to claim 15, wherein data for a point retrieval output control system by a telephone number for controlling an output of information on a point of a subscriber of the telephone number on the basis of classifications of the subscriber of that telephone number is stored, wherein identifying information for classifying the subscriber of the telephone number is stored by each telephone number of subscriber.

## Patentansprüche

1. Punktabfrageausgabesystem über eine Telefonnummer zum Eingeben einer Telefonnummer, Abfragen von Informationen über einen Punkt eines Teilnehmers dieser Telefonnummer und Ausgeben der Informationen, wobei das Punktabfrageausgabesystem über eine Telefonnummer aufweist:
eine Speichereinrichtung (3) zum Speichern von mindestens Telefonnummern, spezifischen Informationen zum Spezifizieren der Teilnehmer, Informationen über die Punkte der Teilnehmer und Identifizierinformationen zum Klassifizieren des Teilnehmers der Telefonnummer;
eine Eingabeeinrichtung (1) zum Eingeben einer Telefonnummer oder der spezifischen Informationen zum Spezifizieren des Teilnehmers;
eine Abfrageeinrichtung (4) zum Abfragen von Informationen über den Punkt des Teilnehmers auf der Basis der Telefonnummer oder der spezifischen durch die Eingabeeinrichtung (1) eingegebenen Informationen zum Spezifizieren des Teilnehmers; und
eine Ausgabesteuereinrichtung (4, 6) zum Beurteilen der Identifizierinformationen unter der Bedingung, dass spezifische Informationen zum Spezifizieren des Teilnehmers auf der Basis der Beurteilung eingegeben werden, wenn die Telefonnummer eingegeben wird, zum Steuern einer Ausgabe von durch die Abfrageeinrichtung (4) abgefragten Informationen über den Punkt des Teilnehmers, auf der Basis der Eingaben der Telefonnummer und von spezifischer Informationen zum Spezifizieren des Teilnehmers,
wobei die Identifizierinformationen ein Vorhandensein und Fehlen einer Beschränkung angegeben, wobei eine Telefonnummer eines Privatteilnehmers eine Einstellung mit einer Beschränkung aufweist, und eine sich von den Telefonnummern eines Privatteilnehmers unterscheidende Telefonnummer eine Einstellung mit keiner Beschränkung aufweist.

2. Punktabfrageausgabesystem über eine Telefonnummer gemäß Anspruch 1, wobei die Ausgabesteuereinrichtung (4, 6) Informationen über den Punkt des Teilnehmers des Telefons ausgibt, die unter der Bedingung abgefragt werden, dass die Identifizierinformationen keine Beschränkung aufweisen.

3. Punktabfrageausgabesystem über eine Telefonnummer gemäß Anspruch 1, wobei die Ausgabesteuereinrichtung (4, 6) eine Übereinstimmung der spezifischen Informationen zum Spezifizieren des Teilnehmers der Telefonnummer durch Eingeben der spezifischen Informationen zum Spezifizieren des Teilnehmers der Telefonnummer unter der Bedingung, dass die Identifizierinformationen eine Beschränkung aufweist, beurteilt, und die Informationen über den Punkt des übereinstimmenden Teilnehmers ausgibt.

4. Punktabfrageausgabesystem über eine Telefonnummer gemäß Anspruch 1, wobei die Ausgabesteuereinrichtung (4, 6) ein Menü zum Auswählen eines privaten Wohnorts oder einer Umgebung einer lokalen Telefonvermittlungsstellennummer unter der Bedingung anzeigt, dass die Identifizierinformationen eine Einschränkung aufweist.

5. Punktabfrageausgabesystem über eine Telefonnummer gemäß Anspruch 4, wobei ein Übereinstimmen der spezifischen Informationen zum Spezifizieren des Teilnehmers der Telefonnummer durch Eingeben der spezifischen Informationen zum Spezifizieren des Teilnehmers beurteilt wird, und Informationen über den Punkt des Teilnehmers der übereinstimmenden Telefonnummer ausgegeben werden, wenn ein privater Wohnort ausgewählt ist.

6. Punktabfrageausgabesystem über eine Telefonnummer gemäß Anspruch 1, wobei die Ausgabesteuereinrichtung (4, 6) ein Menü zum Auswählen einer Umgebung einer lokalen Telefonvermittlungsstellennummer anzeigt, wenn die Telefonnummer nicht abgefragt werden kann, oder die Ziffern der Telefonnummer nur bis hin zu der lokalen Telefonvermittlungsstellennummer eingegeben werden.

7. Punktabfrageausgabesystem über eine Telefonnummer gemäß Anspruch 4 oder 6, wobei die Speichereinrichtung (3) Kartendaten speichert und die Ausgabesteuereinrichtung (4, 6) eine Umgebungskarte ausgibt, wenn die Umgebung der lokalen Telefonvermittlungsstellennummer ausgewählt wird, oder eine Umgebungskarte durch Eingeben der Adresse im Rahmen der lokalen Telefonvermittlungsnummer ausgibt.

8. Punktabfrageausgabesystem über eine Telefonnummer gemäß Anspruch 3 oder 6, wobei die Eingabe der spezifischen Informationen zum Spezifizieren des Teilnehmers daraus besteht, mindestens einen Teil eines Namens des Teilnehmers mit der japanischen Silbenschrift einzugeben.

9. Punktabfrageausgabesystem über eine Telefonnummer gemäß Anspruch 1, wobei die Speichereinrichtung (3) Identifizierinformationen zum Klassifizieren des Teilnehmers der Telefonnummer speichert.

10. Punktabfrageausgabesystem über eine Telefonnummer gemäß Anspruch 9, wobei die Identifizierinformationen Informationen zum Klassifizieren sind, ob der Teilnehmer ein Privatteilnehmer ist oder nicht.

11. Punktabfrageausgabesystem über eine Telefonnummer gemäß Anspruch 1, wobei die Speichereinrichtung (3) vorregistrierte Punktinformationen speichert, und die Ausgabesteuereinrichtung (4, 6) diese Punktinformationen ausgibt, wenn die durch die Abfrageeinrichtung abgefragte Telefonnummer die Punktinformationen aufweist.

12. Punktabfrageausgabesystem über eine Telefonnummer gemäß Anspruch 1, wobei die Speichereinrichtung (3) Kartendaten, mindestens eine Adresse oder einen Namen als Informationen über den Punkt des Teilnehmers und Punktkoordinaten speichert, und die Ausgabesteuereinrichtung (4, 6) eine Karte auf der Basis der Punktkoordinaten anzeigt, nachdem die Adresse oder der Name angezeigt wird, wenn Informationen über den Punkt des Teilnehmers ausgegeben werden.

13. Punktabfrageausgabesystem über eine Telefonnummer gemäß Anspruch 1, wobei die Speichereinrichtung (3) Punktinformationsdaten speichert, die mindestens Telefonnummern, Angaben oder Punktnamen, Adressen und Punktkoordinaten, Telefonnummerdaten zum Abfragen einer Telefonnummer und japanische Silbenschriftdaten zum Abfragen einer Angabe oder eines Punktnamens speichert.

14. Punktabfrageausgabesystem über eine Telefonnummer gemäß Anspruch 1, wobei die Ausgabesteuereinrichtung (4, 6) weiterhin aufweist:
eine Punkteinstelleinrichtung zum Einstellen von Informationen über den Punkt des Teilnehmers, die durch die Ausgabesteuereinrichtung als ein Leitziel ausgegeben werden.

15. Computerlesbares Speichermedium, in dem Daten für das Punktabfrageausgabesystem über eine Telefonnummer zum Abfragen von Informationen über einen Punkt eines Teilnehmers einer Telefonnummer anhand einer Eingabe der Telefonnummer und Programme gespeichert sind, wobei das computerlesbare Speichermedium enthält:
Daten, die mindestens die Telefonnummer, spezifische Informationen zum Spezifizieren des Teilnehmers, Informationen über den Punkt des Teilnehmers und Identifizierinformationen zum Klassifizieren des Teilnehmers der Telefonnummer aufweisen;
ein Abfrageprogramm zum Realisieren einer Funktion zum Abfragen von Informationen über den Punkt des Teilnehmers auf der Basis der Telefonnummer und spezifischer Informationen zum Spezifizieren des einzugebenden Teilnehmers; und
ein Ausgabesteuerprogramm zum Beurteilen der Identifizierinformationen, wenn die Telefonnummer eingegeben wird, und, unter der Bedingung, dass spezifische Informationen zum Spezifizieren des Teilnehmers auf der Basis der Beurteilung eingegeben werden, zum Realisieren einer Funktion zum Steuern einer Ausgabe von durch das Abfrageprogramm abgefragten Informationen über den Punkt des Teilnehmers, auf der Basis der Telefonnummer und der spezifischen Informationen zum Spezifizieren des einzugebenden Teilnehmers,
wobei die Identifizierinformationen ein Vorhandensein und einen Fehlen einer Beschränkung angeben, wobei eine Telefonnummer eines Privatteilnehmers eine Einstellung mit einer Beschränkung aufweist, und eine sich von Telefonnummern von Privatteilnehmern unterscheidende Telefonnummer eine Einstellung mit keiner Beschränkung aufweist.

16. Computerlesbares Speichermedium gemäß Anspruch 15, wobei das Medium Daten enthält, die eine Datenstruktur aufweisen, in der Identifizierinformationen zum Klassifizieren eines Teilnehmers einer Telefonnummer gespeichert sind.

17. Computerlesbares Speichermedium gemäß Anspruch 15, wobei Daten für ein Punktabfrageausgabesteuersystem über eine Telefonnummer zum Steuern einer Ausgabe von Informationen über einen Punkt eines Teilnehmers der Telefonnummer auf der Basis von Klassifizierungen des Teilnehmers dieser Telefonnummer gespeichert werden, wobei Identifizierinformationen zum Klassifizieren des Teilnehmers der Telefonnummer für jede Telefonnummer des Teilnehmers gespeichert werden.

## Revendications

1. Système de sortie de recherche de localisation par numéro de téléphone destiné à appliquer en entrée un numéro de téléphone, à récupérer des informations sur la localisation d'un abonné de ce numéro de téléphone et à fournir en sortie lesdites informations, ledit système de sortie de recherche de localisation par numéro de téléphone comprenant :
un moyen de mémoire (3) destiné à mémoriser au moins des numéros de téléphone, des informations spécifiques destinées à spécifier les abonnés, des informations sur les localisations des abonnés, et à identifier des informations pour classer l'abonné du numéro de téléphone,
un moyen d'entrée (1) destiné à appliquer en entrée un numéro de téléphone ou les informations spécifiques pour spécifier l'abonné,
un moyen de récupération (4) destiné à récupérer des informations sur la localisation de l'abonné sur la base du numéro de téléphone ou des informations spécifiques pour spécifier l'entrée d'abonné par ledit moyen d'entrée (1), et
un moyen de commande de sortie (4, 6) destiné à évaluer lesdites informations d'identification lorsque le numéro de téléphone est appliqué en entrée et, à la condition que les informations spécifiques destinées à spécifier l'abonné soient appliquées en entrée sur la base de ladite évaluation, à commander une sortie d'informations sur la localisation de l'abonné récupérées par ledit moyen de récupération (4) sur la base des entrées du numéro de téléphone et des informations spécifiques pour spécifier l'abonné,
dans lequel lesdites informations d'identification sont indicatives de la présence et de l'absence d'une restriction, où un numéro de téléphone d'un abonné privé reçoit un paramétrage de restriction et un numéro de téléphone autre que des numéros de téléphone d'abonnés privés reçoit un paramétrage d'absence de restriction.

2. Système de sortie de recherche de localisation par numéro de téléphone selon la revendication 1, dans lequel ledit moyen de commande de sortie (4, 6) fournit en sortie des informations sur la localisation de l'abonné du téléphone récupérées à la condition que lesdites informations d'identification indiquent une absence de restriction.

3. Système de sortie de recherche de localisation par numéro de téléphone selon la revendication 1, dans lequel ledit moyen de commande de sortie (4, 6) évalue une correspondance des informations spécifiques pour spécifier l'abonné du numéro de téléphone en appliquant en entrée les informations spécifiques pour spécifier l'abonné du numéro de téléphone à la condition que lesdites informations d'identification indiquent une restriction et fournit en sortie des informations sur la localisation de l'abonné correspondant.

4. Système de sortie de recherche de localisation par numéro de téléphone selon la revendication 1, dans lequel ledit moyen de commande de sortie (4, 6) affiche un menu destiné à sélectionner un domicile privé ou la proximité d'un numéro de central téléphonique local à la condition que lesdites informations d'identification indiquent une restriction.

5. Système de sortie de recherche de localisation par numéro de téléphone selon la revendication 4, dans lequel une correspondance des informations spécifiques pour spécifier l'abonné du numéro de téléphone en appliquant en entrée des informations spécifiques pour spécifier l'abonné est évaluée et des informations sur la localisation de l'abonné du numéro de téléphone correspondant sont fournies en sortie lorsqu'un domicile privé est sélectionné.

6. Système de sortie de recherche de localisation par numéro de téléphone selon la revendication 1, dans lequel ledit moyen de commande de sortie (4, 6) affiche un menu destiné à sélectionner la proximité d'un numéro de central téléphonique local lorsque le numéro de téléphone ne peut pas être récupéré ou que les chiffres du numéro de téléphone ne sont reçus en entrée que sous la forme du numéro de central téléphonique local.

7. Système de sortie de recherche de localisation par numéro de téléphone selon la revendication 4 ou 6, dans lequel ledit moyen de mémoire (3) mémorise des données cartographiques et ledit moyen de commande de sortie (4, 6) fournit en sortie une carte de proximité lorsque la proximité du numéro de central téléphonique local est sélectionnée ou une carte de proximité en recevant en entrée l'adresse qui figure dans le numéro du central téléphonique local.

8. Système de sortie de recherche de localisation par numéro de téléphone selon la revendication 3 ou 6, dans lequel l'entrée des informations spécifiques pour spécifier ledit abonné consiste à appliquer en entrée au moins une partie du nom de l'abonné avec le syllabaire japonais.

9. Système de sortie de recherche de localisation par numéro de téléphone selon la revendication 1, dans lequel ledit moyen de mémoire (3) mémorise des informations d'identification pour classer l'abonné du numéro de téléphone.

10. Système de sortie de recherche de localisation par numéro de téléphone selon la revendication 9, dans lequel lesdites informations d'identification sont des informations destinées à établir un classement pour déterminer si l'abonné est ou non un abonné privé.

11. Système de sortie de recherche de localisation par numéro de téléphone selon la revendication 1, dans lequel ledit moyen de mémoire (3) mémorise des informations de localisation préenregistrées et ledit moyen de commande de sortie (4, 6) fournit en sortie ces informations de localisation lorsque le numéro de téléphone récupéré par ledit moyen de récupération présente lesdites informations de localisation.

12. Système de sortie de recherche de localisation par numéro de téléphone selon la revendication 1, dans lequel ledit moyen de mémoire (3) mémorise des données cartographiques, au moins une adresse ou un nom en tant qu'informations sur la localisation de l'abonné et des coordonnées de localisation, et ledit moyen de commande de sortie (4, 6) affiche une carte sur la base desdites coordonnées de localisation après que ladite adresse ou ledit nom est affiché lorsque les informations sur la localisation dudit abonné sont fournies en sortie.

13. Système de sortie de recherche de localisation par numéro de téléphone selon la revendication 1, dans lequel ledit moyen de mémoire (3) mémorise des données d'informations de localisation comportant au moins des numéros de téléphone, des lectures ou des noms de localisation, des adresses et des coordonnées de localisation, des données de numéro de téléphone destinées à récupérer un numéro de téléphone et des données de syllabaire japonais destinées à récupérer une lecture ou un nom de localisation.

14. Système de sortie de recherche de localisation par numéro de téléphone selon la revendication 1, dans lequel ledit moyen de commande de sortie (4, 6) comprend en outre
un moyen de paramétrage de localisation destiné à paramétrer des informations sur la localisation de l'abonné fournies en sortie par ledit moyen de commande de sortie en tant que destination de guidage.

15. Support de mémoire lisible par un ordinateur dans lequel des données destinées au système de sortie de recherche de localisation par numéro de téléphone destiné à récupérer les informations sur la localisation de l'abonné d'un numéro de téléphone lors d'une entrée du numéro de téléphone et des programmes sont mémorisées, dans lequel ledit support de mémoire lisible par un ordinateur contient des données comportant au moins le numéro de téléphone, des informations spécifiques pour spécifier l'abonné, des informations sur la localisation de l'abonné et des informations d'identification pour classer l'abonné du numéro de téléphone,
un programme de récupération destiné à réaliser une fonction pour récupérer des informations sur la localisation de l'abonné sur la base du numéro de téléphone et des informations spécifiques pour spécifier l'abonné devant être appliquées en entrée, et
un programme de commande de sortie destiné à évaluer lesdites informations d'identification lorsque le numéro de téléphone est appliqué en entrée et, à la condition que des informations spécifiques pour spécifier l'abonné soient appliquées en entrée sur la base de ladite évaluation, à réaliser une fonction pour commander une sortie des informations sur la localisation de l'abonné récupérées par ledit programme de récupération sur la base du numéro de téléphone et des informations spécifiques pour spécifier l'abonné devant être appliquées en entrée,
dans lequel lesdites informations d'identification sont indicatives de la présence ou de l'absence d'une restriction, où un numéro de téléphone d'un abonné privé reçoit un paramétrage de restriction et un numéro de téléphone autre que des numéros de téléphone d'abonnés privés reçoit un paramétrage d'absence de restriction.

16. Support de mémoire lisible par un ordinateur selon la revendication 15, dans lequel le support contient des données présentant une structure de données, où des informations d'identification pour classer un abonné d'un numéro de téléphone sont mémorisées.

17. Support de mémoire lisible par un ordinateur selon la revendication 15, dans lequel des données pour un système de commande de sortie de recherche de localisation par numéro de téléphone pour commander une sortie d'informations sur la localisation d'un abonné du numéro de téléphone sur la base de classements de l'abonné de ce numéro de téléphone sont mémorisées, où les informations d'identification pour classer l'abonné du numéro de téléphone sont mémorisées pour chaque numéro de téléphone d'abonné.
